# EUROPÄISCHE PATENTSCHRIFT

(11) **EP 1 107 086 B1**
(45) Veröffentlichungstag und Bekanntmachung des Hinweises auf die Patenterteilung: **09.06.2004**
(21) Anmeldenummer: 00123406.1
(22) Anmeldetag: 02.11.2000
(51) Int. Cl.: G05G 5/06, B60N 2/16, B60N 2/44

(54) **Anordnung zur Handbetätigung, wie zur Verriegelung und/oder Entriegelung von Teilen eines Fahrzeugsitzes**
Device for manual actuation, such as locking and/or unlocking of parts of a vehicle seat
Dispositif de commande, telle que verrouillage et/ou déverrouillage d'éléments d'un siège de véhicule

(30) Priorität: 09.12.1999 DE 29921648 U
(43) Veröffentlichungstag der Anmeldung: 13.06.2001
(73) Patentinhaber: Johnson Controls GmbH, 51399 Burscheid (DE)
(72) Erfinder: Plum, Wolfgang, 41179 Mönchengladbach (DE)
(74) Vertreter: Kutzenberger, Helga, Dr.

(56) Entgegenhaltungen:
- EP-A- 0 827 058
- US-A- 4 038 508
- US-A- 4 616 876
- US-A- 5 537 892

## Beschreibung

Die vorliegende Erfindung betrifft eine Anordnung zur Handbetätigung, wie zur Verriegelung und/oder Entriegelung von Teilen eines Fahrzeugsitzes, mit einem Hebelteil und mit einem Gehäuseteil, wobei das Hebelteil eine Öffnung des Gehäuseteils durchgreift.

Derartige Anordnungen sind z.B. aus der Patentschrift US-A-4 616 876 bekannt und werden beispielsweise auch in Kraftfahrzeugen zur Entriegelung von klappbaren Rückenlehnen eingesetzt. Das Hebelteil wird dabei in der insbesondere schlitzförmigen Öffnung des Gehäuseteils geführt und ist aus einer Ruhestellung in eine Entriegelungsstellung verschwenkbar, in der über einen Betätigungsabschnitt des Hebelteils eine Arretierungseinrichtung der Rückenlehne entsperrt wird. Ein Nachteil dieser bekannten Anordnungen besteht darin, daß insbesondere während der Fahrt des Kraftfahrzeuges, z.B. durch Vibrationen, Klappergeräusche auftreten können.

Der Erfindung liegt die Aufgabe zugrunde, eine Anordnung der eingangs genannten Art mit geringem konstrukiven Aufwand derart zu verbessern, daß das Auftreten von Klappergeräuschen vollständig unterbunden wird.

Erfindungsgemäß wird dies dadurch erreicht, daß das Gehäuseteil mindestens ein Federmittel aufweist, das in mindestens einer Stellung des Hebelteils das Hebelteil in der Öffnung verklemmt.
Durch das Verklemmen mit Hilfe des Federmittels wird auf strukturell einfache Weise ein spielfreier Sitz des Hebelteils in der Öffnung des Gehäuseteils erreicht.

Das Federmittel kann dabei bevorzugt jeweils durch eine elastische Zunge an einer Wand des Gehäuseteiles gebildet sein. Eine solche Zunge kann z.B. aus einem Federstahlblech bestehen, das am Gehäuseteil befestigt ist. Besonders bevorzugt ist jedoch eine Ausführung, bei der die elastische Zunge aus der Wand des Gehäuseteiles freigeschnitten ist, weil dies eine einstückige Fertigung des Gehäuseteils - beispielsweise als ein aus Kunststoff bestehendes Spritzgußteil - zuläßt. Weitere vorteilhafte Ausgestaltungsmerkmale der Erfindung sind in den Unteransprüchen sowie der folgenden Beschreibung enthalten.

Anhand eines in der Zeichnung veranschaulichten, bevorzugten Ausführungsbeispiels wird im folgenden die Erfindung näher erläutert. Dabei zeigen:
- Fig. 1: ein Gehäuseteil einer erfindungsgemäßen Anordnung zur handbetätigten Entriegelung einer Freischwenkeinrichtung einer Rückenlehne eines Fahrzeugsitzes, dargestellt als Drahtmodell in einer Seitenansicht,
- Fig. 2: in Fig. 1 lagezugeordneter Seitenansicht, ein Hebelteil einer erfindungsgemäßen Anordnung zur handbetätigten Entriegelung einer Freischwenkeinrichtung einer Rückenlehne eines Fahrzeugsitzes,
- Fig. 3: das Gehäuseteil gemäß Fig. 1, dargestellt als Drahtmodell in der Vorderansicht,
- Fig. 4: das Hebelteil gemäß Fig. 2, dargestellt in einer Schnittansicht entlang der Linie IV-IV in Fig. 2,
- Fig. 5: eine Querschnittsansicht des Gehäuseteils der erfindungsgemäßen Anordnung der Schnittebene V-V in Fig. 1,
- Fig. 6: eine Längsschnittansicht des Gehäuseteils der erfindungsgemäßen Anordnung der Schnittebene VI-VI in Fig. 3.

In den verschiedenen Figuren der Zeichnung sind gleiche Teile stets mit den gleichen Bezugszeichen versehen und werden daher in der Regel auch jeweils nur einmal beschrieben.

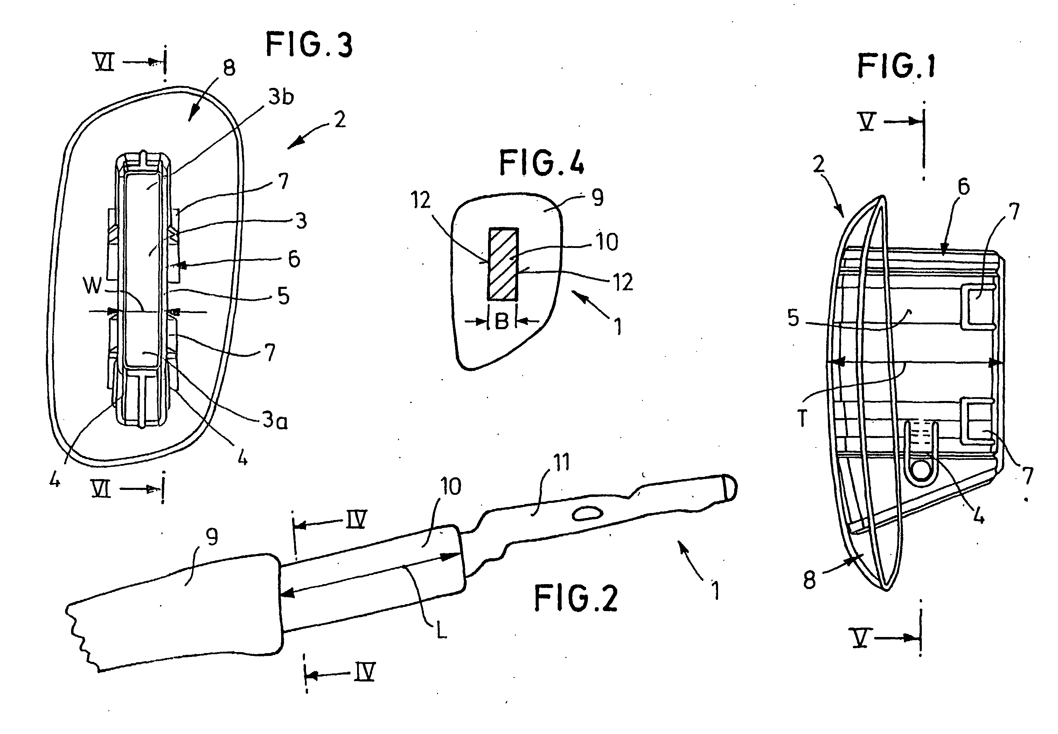

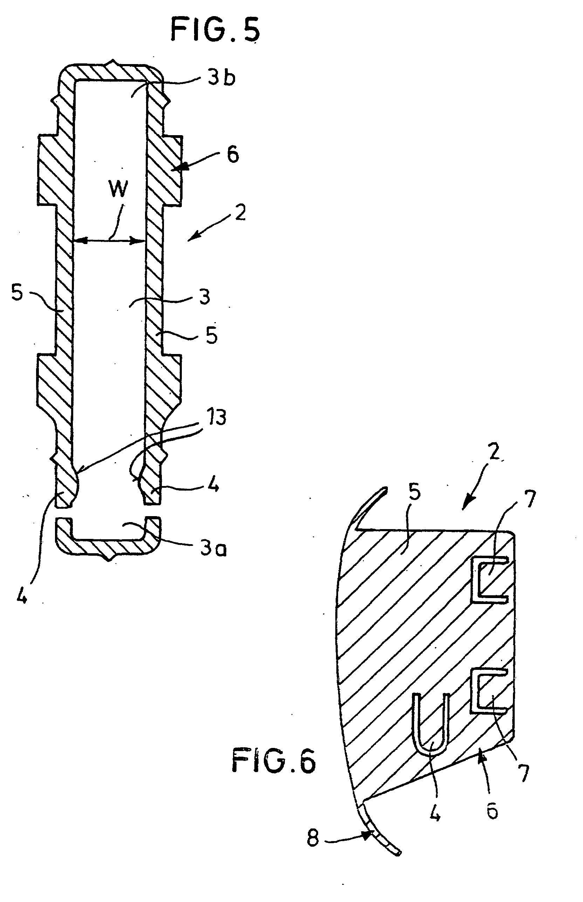

Wie aus den Zeichnungsfiguren hervorgeht, weist eine erfindungsgemäße Anordnung zur Handbetätigung, wie zur Verriegelung und/oder Entriegelung von Teilen eines Fahrzeugsitzes, bei der es sich in der beispielhaft dargestellten Ausführung um eine Anordnung zur handbetätigten Entriegelung einer Freischwenkeinrichtung einer Rückenlehne eines Fahrzeugsitzes handelt, ein Hebelteil 1 (Fig. 2 und 4) und ein Gehäuseteil 2 (Fig. 1, Fig. 3 bis 6) auf. Im Montagezustand durchgreift das Hebelteil 1 eine insbesondere schlitzförmige bzw. langlochartige Öffnung 3 (Fig. 3, 5) des Gehäuseteils 2 und ist in dieser Öffnung 3 schwenkbeweglich geführt, wobei es zur Entriegelung der nicht dargestellten Freischwenkeinrichtung manuell aus einer Ruhestellung an dem einen Schlitz- bzw. Lochende 3a (insbesondere Fig. 3 und 5 - jeweils in der unteren Gehäusehälfte) in eine Entriegelungsendstellung an dem anderen Schlitz- bzw. Lochende 3b (insbesondere Fig. 3 und 5 - jeweils in der oberen Gehäusehälfte) bewegt werden kann.

Wie insbesondere aus Fig. 1 und 4 deutlich wird, weist das Gehäuseteil 2 erfindungsgemäß mindestens ein Federmittel 4 - im dargestellten Fall zwei - insbesondere symmetrisch zueinander angeordnete Federmittel 4, auf, zwischen denen das Hebelteil 1 in mindestens einer Stellung - im dargestellten Fall in der Ruhestellung - in der Öffnung 3 verklemmt wird.

Bedarfsweise könnte das Gehäuseteil 2 auch mehrere, beispielsweise vier, Federmittel 4 aufweisen, durch die das Hebelteil 1 in mindestens zwei seiner möglichen Positionen in der Öffnung 3 verklemmt werden könnte.

Wie aus Fig. 1, 3, 5 und 6 hervorgeht, ist das Federmittel 4 jeweils durch eine elastische Zunge an einer Wand 5 des Gehäuseteiles 2 gebildet. Das Gehäuseteil 2 kann vorteilhafterweise als einstückiges Kunststoffteil ausgeführt sein und insbesondere aus Polyoxymethylen (POM) bestehen, wobei die elastische Zunge aus der Wand 5 des Gehäuseteiles 2 freigeschnitten ist. Auf diese Weise ist einerseits eine wenig aufwendige Herstellungsweise und andererseits ein insbesondere den bei Verwendung auftretenden mechanischen Beanspruchungen gerecht werdende Stabilität gewährleistet.

Das Gehäuseteil 2 weist einen Hülsenabschnitt 6 auf, der die Wand 5 für die schlitzförmige bzw. langlochartige Öffnung 3 bildet und dazu bestimmt ist, in eine korrespondierende Öffnung des zu verriegelnden und/oder zu entriegelnden Teiles eines Fahrzeugsitzes, beispielsweise der genannten Rückenlehne, eingesteckt zu werden. Zur Befestigung im/am Sitzteil kann das Gehäuseteil 2 - wie dargestellt - Rastmittel 7 am Hülsenabschnitt 6 aufweisen. Die Rastmittel 7 sind ebenfalls durch elastische Zungen gebildet, die aus der Wand 5 des Gehäuseteiles 2 freigeschnitten sind.

Des weiteren weist das Gehäuseteil 2 einen Kragenabschnitt 8 (Fig. 1, 3, 6) auf, der von dem Hülsenabschnitt 6 an einem Ende seitlich absteht und dazu bestimmt ist, die korrespondierende Öffnung des zu verriegelnden und/oder zu entriegelnden Teiles des Fahrzeugsitzes seitlich abzudecken. Außerdem begrenzt der Kragenabschnitt 8 die Einsteckbewegung des Gehäuseteils 2 in diese Öffnung. Der Kragenabschnitt 8 kann eben oder - wie dargestellt - gewölbt ausgebildet sein.

Das Hebelteil 1 (Fig. 2, 4) kann auf unterschiedliche Art ausgebildet sein. In der dargestellten Ausführung weist es ein Griffstück 9 und einen Schaft auf, der aus einem am Griffstück 9 befindlichen Übergangsabschnitt 10 und einem sich an den Übergangsabschnitt 10 anschließenden Betätigungsabschnitt 11 gebildet ist. Der Betätigungsabschnitt 11 kann wie die Zeichnung veranschaulicht, insbesondere flach, wie z.B. der Bart eines Sicherheitsschlüssels oder ein Kfz-Zündschlüssel ausgebildet sein.

Der Übergangsabschnitt 10 kann einstückig und materialeinheitlich mit dem Griffstück 9 ausgebildet sein und vorzugsweise aus Kunststoff, insbesondere ebenfalls aus Polyoxymethylen (POM) bestehen. Insbesondere der Übergangsabschnitt 10 ist im Montagezustand der erfindungsgemäßen Anordnung in der Öffnung 3 des Gehäuseteils 2 geführt und kann dazu eine an die Länge T des Hülsenabschnitts 6 des Gehäuseteils 2 angepaßte Länge L aufweisen. Wie die Darstellung in Fig. 4 zeigt, kann der Übergangsabschnitt 10 insbesondere einen rechteckigen Querschnitt aufweisen, wobei die Rechteckbreite B geringfügig kleiner ist als die Weite W (Fig. 3, 5) der Öffnung 3 des Gehäuseteils 2. Das dadurch jeweils vorhandene Spiel zwischen der Wand 5 des Gehäuseteils 2 und einer Seitenwand 12 des Übergangsabschnittes 10 wird erfindungsgemäß in der Ruhestellung des Hebelteils 1 (am Lochende 3a) beseitigt.

Die vorliegende Erfindung ist nicht auf das dargestellte Ausführungsbeispiel beschränkt, sondern umfaßt auch alle im Sinne der Erfindung gleichwirkenden Ausführungen. Beispielsweise zeigt insbesondere Fig. 5, daß jeweils die das Federmittel 4 bildende elastische Zunge im Inneren der Öffnung 3 des Gehäuseteils 2 eine konvexe Wölbung 13 aufweist, wodurch ihre Klemmwirkung auf das Hebelteil 1 verstärkt wird. Alternativ oder zusätzlich könnten aber auch am Hebelteil 1 und am Federmittel 4 einander entsprechende Rastelemente, wie Rastnasen, Rastvorsprünge, Rastöffnungen oder dergleichen, angeordnet sein, wodurch das Hebelteil 1 mit dem jeweiligen Federmittel 4 verrastbar ist. Auf diese Weise würde über die im Ausführungsbeispiel vorhandene kraftschlüsssige Verbindung zwischen Hebelteil 1 und Gehäuseteil 2 hinaus auch noch eine formschlüssige Verbindung zwischen den beiden Teilen vorliegen.

Ferner ist die Erfindung nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, daß grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

### Bezugszeichen

- 1: Hebelteil
- 2: Gehäuseteil
- 3: Öffnung in 2
- 4: Federmittel
- 5: Wand von 2
- 6: Hülsenabschnitt
- 7: Rastmittel an 6
- 8: Kragenabschnitt
- 9: Griffstück von 1
- 10: Übergangsabschnitt von 1
- 11: Betätigungsabschnitt von 1
- 12: Seitenwand von 10
- 13: Wölbung von 4

- B: Breite von 10
- L: Länge von 10
- T: Länge von 6
- W: Weite von 3

## Patentansprüche

1. Anordnung zur Handbetätigung, wie zur Verriegelung und/oder Entriegelung von Teilen eines Fahrzeugsitzes, mit einem Hebelteil (1) und mit einem Gehäuseteil (2), wobei das Hebelteil (1) eine Öffnung (3) des Gehäuseteils (2) durchgreift,
**dadurch gekennzeichnet, daß** das Gehäuseteil (2) mindestens ein Federmittel (4) aufweist, das in mindestens einer Stellung des Hebelteils (1) das Hebelteil (1) in der Öffnung (3) verklemmt.

2. Anordnung nach Anspruch 1,
**dadurch gekennzeichnet, daß** das Gehäuseteil (2) mehrere, insbesondere jeweils symmetrisch, unter Zwischenlage des Hebelteiles (1) zueinander angeordnete Federmittel (4) aufweist.

3. Anordnung nach Anspruch 1 oder 2,
**dadurch gekennzeichnet, daß** das Gehäuseteil (2) mehrere Federmittel (4) aufweist, die in mindestens zwei Stellungen des Hebelteils (1) das Hebelteil (1) in der Öffnung (3) verklemmen.

4. Anordnung nach einem der Ansprüche 1 bis 3,
**dadurch gekennzeichnet, daß** das Federmittel (4) jeweils durch eine elastische Zunge an einer Wand (5) des Gehäuseteiles (2) gebildet ist.

5. Anordnung nach Anspruch 4,
**dadurch gekennzeichnet, daß** die elastische Zunge aus der Wand (5) des Gehäuseteiles (2) freigeschnitten ist.

6. Anordnung nach einem der Ansprüche 1 bis 5,
**dadurch gekennzeichnet, daß** am Hebelteil (1) und am Federmittel (4) einander entsprechende Rastelemente, wie Rastnasen, Rastvorsprünge, Rastöffnungen oder dergleichen, angeordnet sind, wodurch das Hebelteil (1) mit dem jeweiligen Federmittel (4) verrastbar ist.

7. Anordnung nach einem der Ansprüche 1 bis 6,
**dadurch gekennzeichnet, daß** das Gehäuseteil (2) einen die Wand (5) der Öffnung (3) bildenden Hülsenabschnitt (6) und einen an dessen einem Ende seitlich abstehenden Kragenabschnitt (8) aufweist, wobei das/die Federmittel (4) in dem Hülsenabschnitt angeordnet ist/sind.

8. Anordnung nach einem der Ansprüche 1 bis 7,
**dadurch gekennzeichnet, daß** das Hebelteil (1) ein Griffstück (9) und einen Schaft aufweist, der aus einem am Griffstück (9) befindlichen Übergangsabschnitt (10) und einem sich an den Übergangsabschnitt (10) anschließenden Betätigungsabschnitt (11) gebildet ist, wobei der Übergangsabschnitt (10) in der Öffnung (3) des Gehäuseteils (2) geführt und jeweils an seiner Seitenwand (12) durch das Federmittel (4) in der Öffnung (3) verklemmbar ist.

## Claims

1. Arrangement for manual actuation, such as for locking and/or releasing parts of a vehicle seat, having a lever part (1) and a housing part (2), the lever part (1) reaching through an opening (3) of the housing part (2), **characterized in that** the housing part (2) has at least one spring means (4) which, in at least one position of the lever part (1), wedges the lever part (1) in the opening (3).

2. Arrangement according to Claim 1, **characterized in that** the housing part (2) has a plurality of spring means (4) which in particular are in each case arranged symmetrically to one another with the lever part (1) being placed in between.

3. Arrangement according to Claim 1 or 2, **characterized in that** the housing part (2) has a plurality of spring means (4) which, in at least two positions of the lever part (1), wedge the lever part (1) in the opening (3).

4. Arrangement according to one of Claims 1 to 3, **characterized in that** the spring means (4) is formed in each case by an elastic tongue on a wall (5) of the housing part (2).

5. Arrangement according to Claim 4, **characterized in that** the elastic tongue is cut free from the wall (5) of the housing part (2).

6. Arrangement according to one of Claims 1 to 5, **characterized in that** mutually corresponding latching elements, such as latching lugs, latching projections, latching openings or the like, are arranged on the lever part (1) and on the spring means (4), as a result of which the lever part (1) can be latched to the respective spring means (4).

7. Arrangement according to one of Claims 1 to 6, **characterized in that** the housing part (2) has a sleeve section (6) forming the wall (5) of the opening (3), and a collar section (8) protruding laterally at its one end, the spring means (4) being arranged in the sleeve section.

8. Arrangement according to one of Claims 1 to 7, **characterized in that** the lever part (1) has a handle piece (9) and a shaft which is formed from a transition section (10) located on the handle piece (9) and an actuating section (11) adjoining the transition section (10), the transition section (10) being guided in the opening (3) of the housing part (2) and being able to be wedged in each case at its side wall (12) in the opening (3) by the spring means (4).

## Revendications

1. Dispositif de commande manuelle, par exemple pour le verrouillage et/ou le déverrouillage de parties d'un siège de véhicule, comprenant une partie de levier (1) et une partie de boîtier (2), la partie de levier (1) venant en prise à travers une ouverture (3) de la partie de boîtier (2),
**caractérisé en ce que** la partie de boîtier (2) présente au moins un moyen de ressort (4) qui serre la partie de levier (1) dans l'ouverture (3) dans au moins une position de la partie de levier (1).

2. Dispositif selon la revendication 1,
**caractérisé en ce que** la partie de boîtier (2) présente plusieurs moyens de ressort (4) notamment disposés à chaque fois symétriquement en intercalant la partie de levier (1).

3. Dispositif selon la revendication 1 ou 2,
**caractérisé en ce que** la partie de boîtier (2) présente plusieurs moyens de ressort (4) qui serrent la partie de levier (1) dans l'ouverture (3) dans au moins deux positions de la partie de levier (1).

4. Dispositif selon l'une quelconque des revendications 1 à 3,
**caractérisé en ce que** le moyen de ressort (4) est formé à chaque fois par une langue élastique sur une paroi (5) de la partie de boîtier (2).

5. Dispositif selon la revendication 4,
**caractérisé en ce que** la langue élastique est découpée dans la paroi (5) de la partie de boîtier (2).

6. Dispositif selon l'une quelconque des revendications 1 à 5,
**caractérisé en ce que** des éléments d'encliquetage se correspondant mutuellement, tels que des nez d'encliquetage, des saillies d'encliquetage, des ouvertures d'encliquetage ou similaires sont disposés sur la partie de levier (1) et sur le moyen de ressort (4), la partie de levier (1) pouvant grâce à eux être encliquetée avec le moyen de ressort (4) respectif.

7. Dispositif selon l'une quelconque des revendications 1 à 6,
**caractérisé en ce que** la partie de boîtier (2) présente une portion de douille (6) formant la paroi (5) de l'ouverture (3), et une portion de rebord (8) saillant latéralement à l'une de ses extrémités, le ou les moyens de ressort (4) étant disposés dans la portion de douille.

8. Dispositif selon l'une quelconque des revendications 1 à 7,
**caractérisé en ce que** la partie de levier (1) présente une pièce de préhension (9) et une tige, qui est formée à partir d'une portion de transition (10) se trouvant sur la pièce de préhension (9) et d'une portion d'actionnement (11) se raccordant à la portion de transition (10), la portion de transition (10) étant guidée dans l'ouverture (3) de la partie de boîtier (2) et pouvant à chaque fois être serrée sur sa paroi latérale (12) par le moyen de ressort (4) dans l'ouverture (3).
